# EUROPEAN PATENT SPECIFICATION

(11) **EP 0 836 727 B1**
(45) Date of publication and mention of the grant of the patent: **29.09.1999**
(21) Application number: 96919084.2
(22) Date of filing: 03.06.1996
(51) Int. Cl.: G06F 17/60, G07F 7/02

(54) **METHODS AND APPARATUS FOR PROVIDING A PREPAID, REMOTE ENTRY CUSTOMER ACCOUNT**
VERFAHREN UND APPARAT ZUM VERFÜGUNGSSTELLEN EINES VORAUSBEZAHLTEN KUNDENKONTOS MIT FERNZUGANG
PROCEDES ET DISPOSITIF VISANT A FOURNIR UN COMPTE CLIENT A PREPAIEMENT ET A ENTREE A DISTANCE

(30) Priority: 01.06.1995 US 456525
(43) Date of publication of application: 22.04.1998
(73) Proprietor: American Express TRS, New York, NY 10285 (US)
(72) Inventor: TASKETT, John, M., Salt Lake City, UT 84121 (US)
(74) Representative: Waldren, Robin Michael
(86) International application number: US9608865
(87) International publication number: WO9638801

(56) References cited:
- WO-A-95/34161
- JP-A- 3 226 896
- JP-A- 5 182 068
- US-A- 5 025 139
- US-A- 5 101 028
- US-A- 5 243 174
- US-A- 5 352 876
- US-A- 5 440 108
- US-A- 5 442 567
- US-A- 5 477 038

## Description

### Technical Field

The present invention generally relates to prepaid, remote memory transaction instruments for use by a consumer for purchasing goods and services which eliminates the need for cash transfers in a commercial transaction, and more particularly, to methods and apparatus for dispensing prepaid instruments which are essentially functionally equivalent to prepaid calling cards from conventional ATM machines, POS devices, and the like.

### Background Art and Technical Problems

Remote memory, prepaid accounts for use in purchasing goods and services are generally well known. Presently known schemes typically involve a printed document, for example a plastic or cardboard wallet size card which bears a customer authorization number and instructions for access to funds, services, and the like. Such prepaid cards have been used extensively throughout the world, for example as prepaid long distance telephone calling cards.

In contrast to stored value cards *(e.g.,* "smart cards"), wherein a remaining account balance is stored within a microprocessor controlled memory resident in the card, remote memory systems typically store information pertaining to a prepaid account at a central host computer, which may be accessed via a telephone or data line by the consumer through the use of an authorization code, Personal Identification Number (PIN), or the like.

The use of prepaid remote memory telephone cards is particularly prevalent in the United States. A typical prepaid telephone calling card includes a toll-free telephone number used by the consumer to access the system, a unique authorization code associated with the card and, hence, the corresponding remote account, and dialing instructions. When a customer desires to use the card to place a long distance call, he dials the toll-free number, thereby accessing the host system which manages the remote accounts. By entering a predetermined authorization number, the consumer is informed by the host computer of the remaining balance. The consumer then enters the desired long distance telephone number, and the system connects the consumer with the desired calling destination. Long distance telephone charges attributed to the telephone call are deducted from the remaining balance, and the call is terminated when the account is fully consumed.

Prepaid telephone calling cards are typically printed in batches, with security measures taken during manufacturing and shipping to prevent the cards or their identifying numbers from being stolen, copied, or otherwise used in a fraudulent manner. In this regard, the identifying numbers, authorization codes, PINs, and the like may be obscured or otherwise covered by packaging techniques, scratch off surfaces, and the like. In this way, unauthorized access to the security codes may be prevented until the card is sold to a consumer and properly activated. However, for retail outlets which maintain a substantial inventory of not yet activated cards, the potential for theft, abuse, and other fraud is high, resulting in expensive audit and inventory control.

Security may be enhanced to some extent by selling prepaid cards through vending machines. For example, a vending machine may contain prepaid calling cards in predetermined dollar amounts, for example, $5.00 cards, $20.00 cards, and the like. Although the use of vending machines provides certain security advantages in the nature of limited access to the cards, they also have several drawbacks. For example, vending machines contain a valuable commodity and are therefore obvious targets for destruction and theft. Moreover, prime locations for these machines are airports and the like which, due to federal regulations and other fees, *(e.g.,* local taxes), are quite expensive locations for these vending machines. In addition, the machines themselves are expensive, and require service to refill, manage inventory, and remove payments. A method of producing and disseminating remote entry, prepaid instruments is thus needed which overcomes the limitations of the prior art.

US 5 025 139 describes an ATM which can dispense coupons such as 'money off' coupons on the back of receipts.

### Summary of the Invention

In accordance with a preferred embodiment of the present invention, a prepaid, remote entry account instrument is printed by an Automated Teller Machine (ATM), Point of Sale (POS) terminal, or other device in much the same way these devices currently print receipts for cash withdrawals, purchases of goods, and the like. More particularly, in accordance with one aspect of the present invention, conventional ATMs may be configured to print an instrument which includes all the information necessary to permit a consumer to conveniently access a remote account and obtain products and/or services in a cashless manner; that is, the ATM generated instrument may include a telephone number (eg., an 800 number), an unique authorization code, and dialling instructions in much the same way that currently preprinted plastic and cardboard prepaid telephone cards serve the analogous function. By maintaining an intermittent or constant communication link between the ATM machine and the host computer which manages the accounts, the ATM may be configured to print appropriate authorization codes and the like on the instrument in response to instructions from the host computer. Indeed, presently available ATMs may be reconfigured to dispense these instruments with little or no hardware changes.

In a first aspect, the present invention provides a distributed system for effecting commercial transactions, comprising:
a conventional ATM machine or Point of Sale device (POS) having a printer associated therewith;
characterised in that the system further comprises:
a service provider network including an account database and a hardware link connecting said service provider network to said ATM (or POS);
an instrument printed by said printer comprising indicia of a authorization code corresponding to a predetermined account associated with said database; and
a transaction terminal comprising a data entry module configured to permit entry of said authorization code thereon, and communication means for establishing contact with said service provider network;
wherein said service provider network is configured to receive indicia of said authorization code from said transaction terminal and to alter the account balance associated with said account in accordance with data entered into said data entry module in the context of performing a commercial transaction.

In a second aspect, the present invention provides a method of effecting a commercial transaction, characterised in that the method comprises the steps of:
providing a service provider network having an account database including a plurality of accounts;
providing a communication link between said service provider network and a conventional ATM or a Point of Sale device ;
entering a PIN into said ATM or POS to thereby access said service provider network through said ATM or POS;
manually entering a desired account balance into said ATM or POS;
generating, in response to said entering step, an authorization code by said service provider network corresponding to a first of said accounts;
printing, by said ATM or POS, an instrument comprising indicia of said authorization code, and thereafter manually entering said authorization code into a data entry terminal;
establishing communication between said data entry terminal and said service provider network in response to the entry of said authorization code information into said data entry terminal;
entering a transaction amount into said data entering terminal; and reducing the balance associate with said first account in accordance with said transaction amount.

The present invention will hereinafter be described in conjunction with the appended drawing figures, wherein like numerals are used to note like elements, and:
Figure 1 is an exemplary instrument generated by an ATM, POS or the like in accordance with the present invention;
Figure 2 is a schematic block diagram of a first embodiment of the present invention wherein the instrument of Figure 1 is printed by an ATM and used in the context of a long distance telephone service system;
Figure 3 is a schematic block diagram of an alternate embodiment of the present invention, wherein the instrument of Figure 1 is used in the context of a vending machine purchase; and
Figure 4 is a schematic block diagram of an alternate embodiment of the present invention, wherein the instrument of Figure 1 is used in the context of a POS device.

### Detailed Description of Preferred Exemplary Embodiments

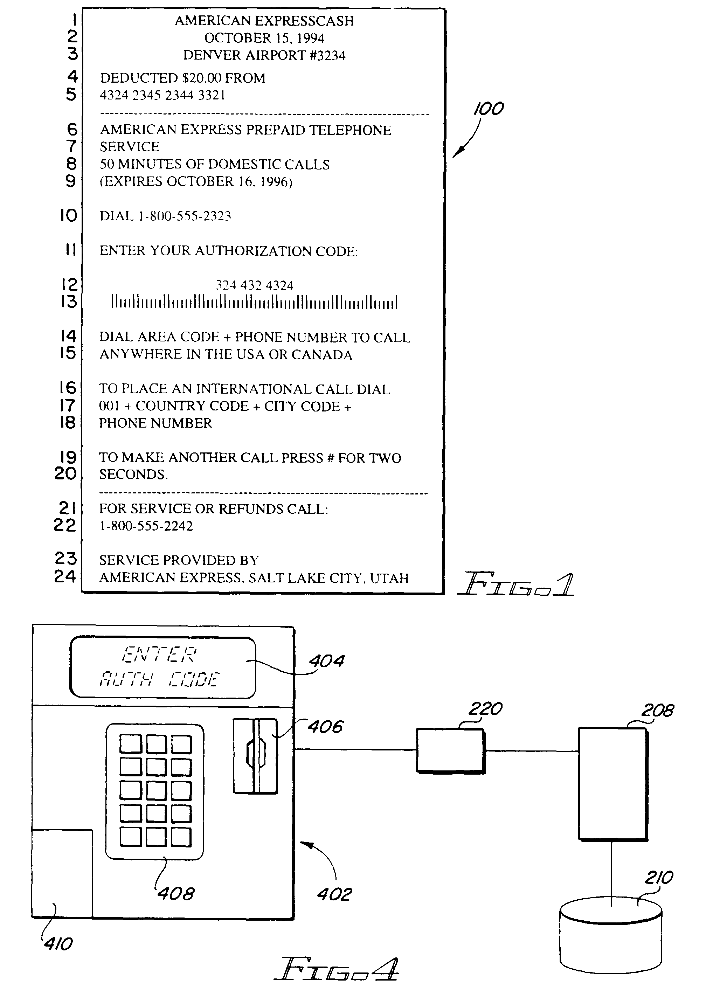

Referring now to Figure 1, presently known ATMs, POS devices, and the like may be conveniently configured in accordance with the present invention to print an exemplary instrument 100; hence, instrument 100 is preferably analogous in its physical embodiment to a receipt typically printed by an ATM at the conclusion of an ATM transaction. It may thus be seen that instrument 100 may be generated by an ATM with little if any hardware reconfiguration; that is, the actual prepaid instrument may be generated in accordance with one aspect of this invention by reconfiguring only the software of presently known ATM machines.

In accordance with the preferred embodiment shown in Figure 1, the software resident in the ATM may be configured to generate any number of desired fields containing virtually any combination of information, as desired. For example, instrument 100 may reflect information pertaining to the issuer of the instrument (line 1), the date and/or time of issuance (line 2), and the location of the machine which issued the instrument with virtually any degree of specificity (line 3).

In addition, the prepaid amount (line 4) as well as the source of the funds (line 5) *(e.g.,* checking account number) may also be set forth. In this regard, it may be desirable under certain circumstances to allow the purchaser of the instrument to select the prepaid amount from a predetermined menu, which may include values of $5.00, $20.00, $100.00, or any desired amount.

Alternatively, it may be desirable to allow the consumer to enter any particular amount *(e.g.,* $34.77, $3,409.20) to precisely conform to the value of the transaction for which the instrument is used. By eliminating the need for the merchant to give change back to the purchaser, the use of the cash may be entirely avoided.

With continued reference to Figure 1, a brief description of the nature of the instrument may be set forth (lines 6-8), including, if desired, the number of minutes of long distance calls provided by the instrument, if appropriate (line 8). In certain applications, it may also be desired to set forth the expiration date (line 9) or any other relevant parameters or characteristics pertaining to the instrument and the nature of its intended use.

In accordance with a further aspect of the present invention, user friendly instructions may be set forth on the instrument to explain to the consumer how the instrument is to be used to effect transactions. In accordance with the illustrated embodiment, instrument 100 suitably sets forth dialing instructions for permitting a user to employ the instrument to make long distance telephone calls. More particularly, instrument 100 instructs the user to dial a telephone number (line 10), for example, a toll-free 800 number, to access the host computer which maintains the account from which "funds" are "withdrawn" or otherwise consumed as a consequence of the long distance telephone calls made in accordance with instrument 100. The instrument thereafter instructs the user (line 11) to enter a predetermined authorization code (line 12) which is preferably unique to a particular instrument. In accordance with a further aspect of the present invention, a bar code (line 13) or other suitable indicia of an authorization code may also be exhibited on the instrument, for example to permit its use with bar code readers, as discussed in greater detail below.

Instrument 100 is further configured to instruct the user to dial a desired destination telephone number (lines 14 and 15); instrument 100 may optionally provide additional instructions for international calls, subsequent calls without hanging up or any other described feature (lines 16-20). If desired, instrument 100 may also instruct the user to contact a customer service number (lines 21-22) as desired.

Given the robust configuration of the present invention, virtually any additional information, data, or even advertising copy may be set forth on the instrument 100 *(e.g.,* lines 23-24).

In accordance with a further aspect of the present invention, instrument 100 may also include a replacement code which may be used by the consumer to report a lost or stolen instrument to the issuer of the instrument, and thereby request a replacement or refund of the instrument. That is, if such an ID code is maintained by the consumer in a place separate and apart from instrument 100, in the event instrument 100 is lost or stolen, a consumer could "cancel" the ID code associated with the lost/stolen instrument, based on the replacement code maintained by the consumer which is advantageously different from yet related to the ID number on the lost/stolen instrument. *See* copending U.S. Patent Application Serial No. , filed on even date herewith by the same inventor, entitled *Methods and Apparatus for Providing a Prepaid, Remote Entry Customer Account.*

As briefly discussed above, a principal advantage of the present invention surrounds the ability to generate prepaid instruments with minimal hardware changes to presently known ATMs; indeed, to the extent software changes are appropriate, the software changes may be made to the software resident at the ATM, the software resident at the host computer with which the ATM communicates, or both, as desired.

More particularly, if the present invention is to be employed in a context of existing ATM networks, the host computer which maintains savings accounts, checking accounts, and the like for a particular bank or group of banks which share access to the ATM may be configured to manage the prepaid accounts corresponding to the various instruments generated by the ATMs. In this way, by enhancing the software at the host computer, a consumer may conveniently enter his existing ATM card into an ATM terminal, enter his PIN, and request from the menu screen the option to receive a prepaid remote entry instrument of the type shown in Figure 1. The ATM software (or the host computer software) may be suitably configured to elicit the information from the consumer necessary to generate the instrument, for example the source of funds for the instrument (i.e., the consumer's bank account, checking account, credit card account, American Express card account, or the like) as well as the prepaid dollar amount associated with the instrument. Upon eliciting the necessary information from the consumer, the host computer or other suitable ATM network computer suitably retrieves or derives an authorization code, and establishes an "account" corresponding to that authorization code in memory. This account management function may be performed at any physical location, depending upon the desired uses of the instruments to be generated. For example, if the instruments are to be employed as prepaid calling cards, the host computer could be integral with the computer resident at the long distance company; alternatively, the host computer could be integral with the ATM network, with the hardware link established between the ATM network and the long distance provider or providers.

Although instrument 100 is discussed herein in the context of an ATM, POS, or other similar device, virtually any modality for supplying a consumer with a unique ID number may be employed. For example, the ID number, as well as any other relevant information (*e.g.*, a telephone number used by the consumer to access the host system), may be conveniently provided to the consumer in a variety of different ways, including displaying the number on the consumer's television set, for example as the result of the consumer interacting with the issuer electronically. Alternatively, the ID number could be delivered to the consumer on the consumer's PC or other non-printed medium. In the context of the present invention, the ID code could even be delivered to the consumer via facsimile or over the telephone, provided that the consumer and the host maintain associated records of the ID number, *i.e.,* as long as the host recognizes the ID number used by the consumer to place requests for goods or services *(e.g.,* long distance telephone calls).

Moreover, the system of the present invention may be conveniently configured to permit the consumer to "recharge" his account, for example by contacting the issuer or host computer *(e.g.,* by telephone), and adding additional value to his then current account balance, for example by authorizing the issuer to credit the consumer's prepaid account from any desired source of the consumer's funds, for example the consumer's checking account, savings account, credit card, or the like.

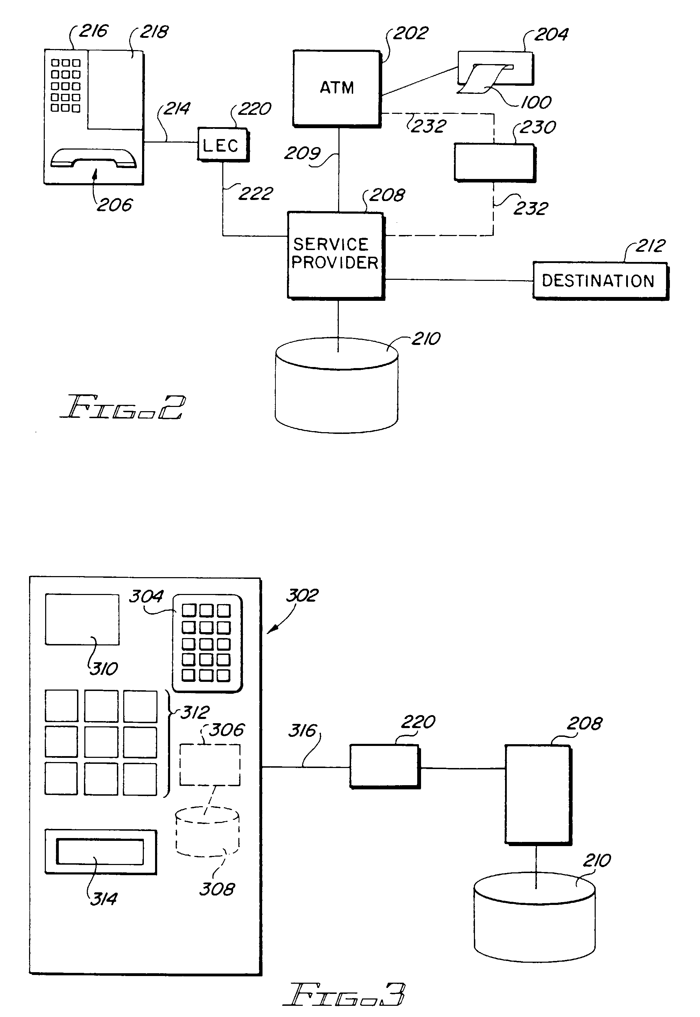

Referring now to Figure 2, a first embodiment of a distributed transaction system suitably comprises an ATM 202, having a printer 204 associated therewith, a data entry terminal 206, a service provider network 208 having an account database 210 associated therewith, and a service destination 212.

In accordance with one aspect of the present invention, the functions of service provider 208 may suitably be performed by a financial institution, credit card issuer, or other entity issuing instruments 100. Those skilled in the art will appreciate that service provider 208 includes suitable computing hardware for effecting the functions set forth herein. Specifically, database 210 is advantageously configured to manage the account balance of the prepaid accounts in the context of the present invention. For this purpose, a constant or temporary hardware link 209 suitably connects ATM 202 with service provider network 208. More particularly and as briefly discussed above, when a consumer "purchases" an instrument 100 through interaction with ATM 202, the interactive sequence may be controlled through software resident at ATM 202, service provider network 208, or a combination thereof. In any event, the authorization code (line 12, Figure 1) is advantageously coordinated between ATM 202 and service provider network 208 to permit service provider 208 to manage the accounts and account balances associated with the authorization codes printed on instrument 100 by ATM 202.

In accordance with a further aspect of the present invention, the ID number which is printed on instrument 100 may be generated in any suitable manner, for example by a random number generator, a pseudo random number generator, or any other suitable algorithm within the host computer. Alternatively, the ID number may be determined by the host in conjunction with the consumer; that is, the host may generate a portion of the ID number, and ask the consumer to append a PIN to the ID number, or otherwise ask the consumer to select one or more digits (or characters in the case of an alpha-numeric ID code), to thereby complete the ID number selection process. Finally, the system may be configured to permit the consumer to select his ID number. In this regard, it may be desirable to permit the host to confirm or otherwise augment the consumer selected number, to avoid "collisions" with other numbers selected by other consumers *(i.e.,* to prevent a consumer from selecting a number which has already been selected by another consumer).

With continued reference to Figure 2, once a consumer retrieves an instrument 100 from ATM 202, he may use the instrument to place long distance telephone calls in the context of the distributed processing systems set forth in Figure 2 in the following manner.

In a preferred embodiment, data entry module 206 suitably comprises a conventional touch tone telephone; alternatively, data entry module 206 may comprise a PC or any other suitable data entry terminal capable of interfacing with a telephone line 214. The consumer in possession of instrument 100 executes the instructions set forth thereon, as discussed above in connection with Figure 1 through an appropriate keypad 216 associated with telephone 206. In an alternate embodiment, it may be desirable to enter certain data into data entry terminal 206 through an alternative input/output modality, for example by reading bar code data with a bar code circuit 218 or any other suitable medium.

Upon dialing the access number (line 10, Figure 1), the telephone call is routed by the Local Exchange Carrier (LEC) 220 to service provider 208 associated with the aforementioned toll-free telephone number. If desired, service provider network 208 may be configured to interactively request information from the consumer, for example through the use of voice prompts. In a preferred embodiment, the user enters data into data entry module 206 through keypad 216; however, it may also be desirable under certain circumstance to employ voice recognition circuitry within service provider 208 to permit the consumer to "speak" information into data entry terminal 206. In any event, once the information pertaining to the authorization code (line 12, Figure 1) is received by the service provider 208, a correlation is made between the authorization code and a particular account resident in database 210. Upon determining the current available "balance" in the account, the service provider may inform the consumer of the amount of long distance time available in the account or any other relevant parameter. Upon entering the desired destination telephone number into data entry terminal 206, either in response to a voice prompt from service provider 208 (or through screen displays in the embodiment wherein data entry terminal 206 is a PC), service provider 208 connects or otherwise permits the connection of telephone 206 with the destination 212. In the illustrated embodiment, destination 212 corresponds to the telephone extension of the area code and phone number entered into data entry module 206 by the consumer, for example corresponding to lines 14-18 in Figure 1. During the course of the long distance telephone call, service provider 208 decreases the available balance in the consumer's account until the account is fully withdrawn, at which time service provider 208 may inform the calling party that the account is fully withdrawn and either invite the calling party or the called party to make other arrangements for payment in order to continue the call, or simply terminate the call.

In the embodiment shown in Figure 2, service provider network 208 includes the capability of connecting long distance telephone calls. Alternatively, service provider 208 may be connected electronically to a remote long distance carrier (not shown) in order to facilitate the completion of long distance telephone calls.

With continued reference to Figure 2, in accordance with an alternative embodiment of the present invention, destination 212 may comprise virtually any "destination", for example a service provider, or a provider of data or information. In this regard, and as briefly discussed above, data entry module 206 may comprise a PC or other processing terminal configured to access a telephone or data network through hardware link 222. In accordance with this alternative embodiment, destination 212 may be suitably configured to download data or information to PC 206, for example in the context of the Internet. Moreover, the account maintained by service provider 208 relating to the instrument 100 used by the consumer to access destination 212 may also be employed to essentially pay for the data downloaded by destination 212 into PC 206. That is, although service provider 208 is equipped to credit value from a particular account in respect of long distance telephone charges, service provider 208 may also be conveniently configured to credit dollar values from the caller's account to a second account maintained by service provider 208 in respect of destination 212. In this way, instrument 100 may be employed by the consumer to, in effect, pay for data downloaded by destination 212 to PC 206 under the control of (or at least facilitated by) service provider network 208.

In accordance with the arrangements set forth Figure 2, ATM 202 may be connected directly to service provider network 208 through hardware link 209; alternatively, ATM (or POS) 202 may be connected to an ATM (or POS) network host 230 through a hardware link 232, with host 230 being connected to service provider network 208 through an additional hardware link 232. In this way, service provider 208 may suitably cooperate with a large number of ATM/POS devices associated with an existing ATM network host.

Referring now to Figure 3, instrument 100 may also be configured for the purchase of goods through a vending machine. In this regard, the information set forth on instrument 100, and in particular lines 6-10 and 14-20, would be set forth as appropriate to facilitate a vending machine transaction. A vending machine 302 suitably comprises a keypad 304, a processor circuit 306, a local database 308, a bar code reader 310, and an inventory of items 312 available for receipt by the consumer through a dispensing chute 314. Vending machine 302 is suitably connected to service provider 208, for example through a hardware link 316. Alternatively, vending machine 302 may be equipped with a modem (not shown), thus permitting the vending machine to dial up a telephone network and establish connection to service provider network 208 through LEC 220.

With continued reference to Figure 3, a consumer may conveniently enter the authorization data (lines 12 and 13, Figure 1) associated with instrument 100 into keypad 304, bar code reader 310, or any other suitable modality *(e.g.,* voice recognition, and the like). Upon entering the authorization data, processor 306 accesses the account information associated with the authorization code. For a closed system involving a small number of vending machines, this information may be maintained locally, for example, in database 308. In the preferred embodiment, the information is maintained remotely in database 210 associated with service provider 208. In accordance with the preferred embodiment, processor 306 causes vending machine 302 to establish communication with service provider 208, to thereby ascertain the available balance in the account. When a communication link is established, service provider 208 may transmit a data packet to vending machine 302 and inform the consumer of the available balance, for example through an audio speaker or screen display (not shown) associated with the vending machine. After the consumer selects the items to be received from the vending machine, the account is "debited" in accordance with the value of these goods, and a new balance is established for the account by service provider 208. As is the case with the prepaid telephone instrument discussed in connection with Figures 1 and 2, upon consuming the available balance, instrument 100 may simply be discarded by the consumer. Inasmuch the account corresponding to instrument 100 has presumably been withdrawn down to zero, it will be essentially impossible for the consumer or the service provider to be defrauded even if instrument 100 were to be later found by a third party who might attempt to perpetuate a fraud based on the information set forth in the instrument.

Referring now to Figure 4, a further alternative embodiment of the present invention uses a version of instrument 100 in the context of a commercial transaction involving a POS terminal. As discussed above in connection with Figures 1 and 2, instrument 100 may be printed or otherwise generated by a POS terminal in a fashion similar to the manner in which an instrument is printed by an ATM terminal. In the context of Figure 4, on the other hand, the POS terminal plays a very different role, namely that of facilitating a sales transaction which utilizes an instrument 100 previously printed by either an ATM, a POS, or the like.

In the embodiment illustrated in Figure 4, a POS terminal 402 suitably includes a display 404, a card reader 406, a keypad 408, and a peripheral interface 410. POS 402 is suitably connected to service provider 208, either directly or through LEC 220. When it is desired to consummate a commercial or financial transaction using instrument 100, the authorization code (lines 12 and 13, Figure 1) or other security information may be entered into POS 402 in any convenient manner. For example, the data may be entered via keypad 408, or via a bar code reader, voice recognition circuit, or other modality cooperating with peripheral interface 410. If desired, the data entry process may be facilitated through the use of user prompts appearing on display 404, as controlled by service provider 208. If, for example, a consumer desires to purchase goods from a merchant using POS 402, the consumer or merchant may simply enter the value of the goods to be purchased into POS 402, whereupon this value is "deducted" from the account maintained by service provider 208 corresponding to the authorization code entered by the user from instrument 100. If the current account balance is sufficient to cover the cost of the goods, the account may be deducted by an amount approximately equal to the cost of the goods (plus any service charge, carrying charge, or the like), whereupon the consumer would take instrument 100 with him for subsequent uses. Alternatively, if the then current available balance is either zero or otherwise insufficient, or if the consumer does not have an instrument 100 at the time he desires to purchase goods or services from the merchant, POS 402 may be employed as described above to generate a new instrument which then may be used to the purchase the goods.

Although the embodiment shown in Figure 4 is set forth in the context of a POS device 402, virtually any device capable of communicating authorization code information to service provider 208 may be employed; hence, even a simple keypad having dial up capability may be employed, underscoring the versatility and robust functionality of instrument 100. Indeed, even if a merchant did not wish to bear the cost of a POS terminal or a keypad, the merchant and/or the consumer at the merchant's facility could simply use the merchant's standard touch tone telephone and call up the service provider *(e.g.,* line 10 in Figure 1), whereupon the service provider could capture the automatic number identification (ANI) associated with the merchant's telephone, and thereby ascertain the identity of the merchant by interrogating database 210. Upon entering the value of the transaction through the telephone keypad as well as the authorization code information from instrument 100, an amount corresponding to the sales transaction could be deducted from the account corresponding to instrument 100, and credited to a separate account maintained by service provider 208 in respect of the merchant, based on the merchant's identity as determined from its ANI.

Further underscoring the versatility of the present invention, the various devices configured to print instrument 100 may be suitably configured to print the data set forth on the instrument in any or a combination of languages.

In accordance with the further aspect of the present invention, remaining account balances, or even entire account balances should the consumer elect not to use an instrument, may be applied to the consumer's credit card, American Express card, or bank account, as desired. In addition, as opposed to using instrument 100 to purchase goods, instrument 100 could effectively be used as a traveler's check or other currency analogue, and simply be used by the consumer at an ATM machine to dispense cash from the "account" represented by the authorization code (lines 12 and 13, Figure 1). Although the present invention is set forth herein in the context of the appended drawing figures, it should be appreciated that the invention is not limited to the specific forms shown. By employing the principles of the present invention in the context of other devices, data networks, and commercial and financial transactions not specifically discussed herein, dramatically enhanced functionality and features may be provided to consumers, merchants, and financial institutions with relatively little increased infrastructure, hardware, or other costs, while affording additional security, inventory control, billing and accounting advantages not presently available with existing systems. These and other modifications and enhancements in the design and arrangement of the various components, processes, steps and descriptions thereof as set forth herein may be made without departing from the scope of the present invention as set forth in the appended claims.

## Claims

1. A distributed system for effecting commercial transactions, comprising:
a conventional ATM machine or Point of Sale device (POS) (202) having a printer (204) associated therewith;
characterised in that the system further comprises:
a service provider network including an account database (210) and a hardware link (209) connecting said service provider network (208) to said ATM or POS (202);
an instrument (100) printed by said printer (204) comprising indicia of a authorization code corresponding to a predetermined account associated with said database (210); and
a transaction terminal comprising a data entry module (206, 302) configured to permit entry of said authorization code thereon, and communication means for establishing contact with said service provider network (208);
wherein said service provider network (208) is configured to receive indicia of said authorization code from said transaction terminal and to alter the account balance associated with said account in accordance with data entered into said data entry module in the context of performing a commercial transaction.

2. A system according to claim 1, wherein said transaction terminal includes a POS terminal.

3. A system according to claim 1, wherein said transaction terminal includes a bar code reader (218).

4. A system according to claim 1, wherein said transaction terminal includes a telephone (206).

5. A system according to claim 1, wherein communication means is functional for effecting toll-free contact with said service provider network (208) when communication is established between the terminal and service provider (208).

6. A system according to claim 1, wherein said instrument further comprises indicia of a replacement code.

7. A system or method according to claim 6, further comprising means functional for establishing communication between a second terminal and said service provider network (208) or customer service system, wherein said service provider network (208) or customer service system is functional to cancel the validity of said authorization code information upon receipt of said indicia of said replacement code.

8. A system according to claim 1, wherein said service provider network (208) is configured to credit a second account in the context of performing said commercial transaction.

9. A method of effecting a commercial transaction, characterised in that the method comprises the steps of:
providing a service provider network (208) having an account database (210) including a plurality of accounts;
providing a communication link (209) between said service provider network (208) and a conventional ATM or a Point of Sale device (POS) (202);
entering a PIN into said ATM (202) or POS to thereby access said service provider network (208) through said ATM (202) or POS;
manually entering a desired account balance into said ATM (202) or POS;
generating, in response to said entering step, an authorization code by said service provider network (208) corresponding to a first of said accounts;
printing, by said ATM (202) or POS, an instrument (100) comprising indicia of said authorization code, and thereafter manually entering said authorization code into a data entry terminal (206, 302);
establishing communication between said data entry terminal (206) and said service provider network (208) in response to the entry of said authorization code information into said data entry terminal (206);
entering a transaction amount into said data entering terminal (206); and
reducing the balance associate with said first account in accordance with said transaction amount.

10. A method according to claim 9, further comprising the step of crediting the balance associated with a second account in accordance with said transaction amount.

## Patentansprüche

1. Verteiltes System zur Ausführung von kommerziellen Transaktionen, mit:
einer herkömmlichen Geldautomat-Maschine (ATM-Maschine) oder automatischen Kassenvorrichtung (POS - "Point Of Sale") (202) mit einem dieser zugeordneten Drucker (204);
dadurch gekennzeichnet, daß das System ferner aufweist:
ein Dienstanbieternetz mit einer Kontendatenbasis (210) und einer Hardwareverbindungsleitung (209), die das Dienstanbieternetz (208) mit dem ATM oder POS (204) verbindet;
ein von dem Drucker (204) gedrucktes Dokument (100) mit einem Aufdruck eines Autorisierungscodes, der einem vorbestimmten Betrag entspricht, der der Datenbasis (210) zugeordnet ist; und
ein Transaktionsendgerät mit einem Dateneingabemodul (206, 302), das konfiguriert ist, um eine Eingabe des Autorisierungscodes darauf zu ermöglichen, und einer Kommunikationseinrichtung zur Kontaktherstellung mit dem Dienstanbieternetz (208);
wobei das Dienstanbieternetz (208) konfiguriert ist, um einen Aufdruck des Autorisierungscodes von dem Transaktionsendgerät zu empfangen und den dem Konto zugeordneten Kontensaldo entsprechend den Daten zu ändern, die in das Dateneingabemodul im Zusammenhang mit der Durchführung einer kommerziellen Transaktion eingegeben werden.

2. System nach Anspruch 1, wobei das Transaktionsendgerät ein POS-Endgerät aufweist.

3. System nach Anspruch 1, wobei das Transaktionsendgerät eine Strichcodeleseeinrichtung (218) aufweist.

4. System nach Anspruch 1, wobei das Transaktionsendgerät ein Telefon (206) aufweist.

5. System nach Anspruch 1, wobei eine Kommunikationseinrichtung funktionsfähig zur Ausführung eines gebührenfreien Kontaktes mit dem Dienstanbieternetz (208) ist, wenn Kommunikation zwischen dem Endgerät und dem Dienstanbieter (208) hergestellt ist.

6. System nach Anspruch 1, wobei das Dokument ferner einen Aufdruck eines Ersatzcodes aufweist.

7. System oder Verfahren nach Anspruch 6, ferner mit einer Einrichtung, die funktionsfähig zur Herstellung einer Kommunikation zwischen einem zweiten Endgerät und dem Dienstanbieternetz (208) oder einem Kundendienstsystem ist, wobei das Dienstanbieternetz (208) oder das Kundendienstsystem funktionsfähig ist, um die Gültigkeit der Autorisierungscodeinformation bei Empfang des Aufdrucks des Ersatzcodes zu löschen.

8. System nach Anspruch 1, wobei das Dienstanbieternetz (208) konfiguriert ist, um einen zweiter Betrag im Zusammenhang mit der Durchführung der kommerziellen Transaktion gutzuschreiben.

9. Verfahren zur Ausführung einer kommerziellen Transaktion, dadurch gekennzeichnet, daß das Verfahren die Schritte aufweist:
Bereitstellen eines Dienstanbieternetzes (208) mit einer Kontendatenbasis (210) mit mehreren Konten;
Bereitstellen einer Kommunikationsverbindungsleitung (209) zwischen dem Dienstanbieternetz (208) und einer herkömmlichen ATM oder einer automatischen Kassenvorrichtung (POS) (202);
Eingeben einer PIN (persönlichen Identitätsnummer) in den Geldautomat (ATM) (202) oder POS, um dadurch über den Geldautomat (202) oder POS auf das Dienstanbieternetz (208) zuzugreifen;
manuelles Eingeben eines gewünschten Kontensaldos in den Geldautomat (ATM) (202) oder POS;
Erzeugen, als Antwort auf den Eingabeschritt, eines Autorisierungscodes durch das Dienstanbieternetz (208) entsprechend einem ersten der Konten;
Drucken, mittels des Geldautomaten (ATM) (202) oder POS, eines Dokuments (100) mit einem Aufdruck des Autorisierungscodes und anschließendes manuelles Eingeben des Autorierungscodes in ein Dateneingabeendgerät (206, 302);
Herstellen von Kommunikation zwischen dem Dateneingabeendgerät (206) und dem Dienstanbieternetz (208) als Antwort auf die Eingabe der Autorisierungscodeinformation in das Dateneingabeendgerät (206);
Eingeben eines Transaktionsbetrags in das Dateneingabeendgerät (206); und
Reduzierung des dem ersten Konto zugeordneten Saldos entsprechend dem Transaktionsbetrag.

10. Verfahren nach Anspruch 9, ferner mit dem Schritt des Gutschreibens des dem zweiten Konto zugeordneten Saldos entsprechend dem Transaktionsbetrag.

## Revendications

1. Système distribué pour effectuer des transactions commerciales, comprenant:
une machine ATM ou un dispositif de point de vente (POS) classique (202) comportant une imprimante (204) qui lui est associée,
caractérisé en ce que le système comprend en outre:
un réseau de fournisseur de services incluant une base de données de comptes (210) et une liaison matérielle (209) connectant ledit réseau de fournisseur de services (208) audit ATM ou POS (202);
un moyen de paiement (100) imprimé par ladite imprimante (204) comprenant un marquage imprimé d'un code d'autorisation correspondant à un compte prédéterminé associé à ladite base de données (210); et
un terminal de transaction comprenant un module d'entrée de données (206, 302) configuré pour permettre l'entrée dudit code d'autorisation dessus et des moyens de communication pour établir un contact avec ledit réseau de fournisseur de services (208),
dans lequel ledit réseau de fournisseur de services (208) est configuré pour recevoir un marquage imprimé dudit code d'autorisation en provenance dudit terminal de transaction et pour modifier le solde de compte associé audit compte conformément à des données entrées dans ledit module d'entrée de données dans le contexte de la réalisation d'une transaction commerciale.

2. Système selon la revendication 1, dans lequel ledit terminal de transaction inclut un terminal POS.

3. Système selon la revendication 1, dans lequel ledit terminal de transaction inclut un lecteur de code barres (218).

4. Système selon la revendication 1, dans lequel ledit terminal de transaction inclut un téléphone (206).

5. Système selon la revendication 1, dans lequel des moyens de communication sont opérants pour établir un contact par appel libre avec ledit réseau de fournisseur de services (208) lorsqu'une communication est établie entre le terminal et le fournisseur de services (208).

6. Système selon la revendication 1, dans lequel ledit moyen de paiement comprend en outre un marquage imprimé d'un code de remplacement.

7. Système ou procédé selon la revendication 6, comprenant en outre des moyens opérant pour établir une communication entre un second terminal et ledit réseau de fournisseur de services (208) ou un système de service client, dans lequel ledit réseau de fournisseur de services (208) ou ledit système de service client est opérant pour annuler la validité de ladite information de code d'autorisation suite à la réception dudit marquage imprimé dudit code de remplacement.

8. Système selon la revendication 1, dans lequel ledit réseau de fournisseur de services (208) est configuré pour créditer un second compte dans le contexte de la réalisation de ladite transaction commerciale.

9. Procédé de réalisation d'une transaction commerciale, caractérisé en ce que le procédé comprend les étapes de:
constitution d'un réseau de fournisseur de services (208) comportant une base de données de comptes (210) incluant une pluralité de comptes;
constitution d'une liaison de communication (209) entre ledit réseau de fournisseur de services (208) et un ATM ou un dispositif de point de vente (POS) classique (202);
entrée d'un PIN dans ledit ATM (202) ou POS pour ainsi accéder audit réseau de fournisseur de services (208) par l'intermédiaire dudit ATM (202) ou POS;
entrée de façon manuelle d'un solde de compte souhaité dans ledit ATM (202) ou POS;
génération, en réponse à ladite étape d'entrée, d'un code d'autorisation par ledit réseau de fournisseur de services (208) en correspondance avec un premier desdits comptes;
impression, par ledit ATM (202) ou POS, d'un moyen de paiement (100) comprenant un marquage imprimé dudit code d'autorisation et ensuite, entrée de façon manuelle dudit code d'autorisation dans un terminal d'entrée de données (206, 302);
établissement d'une communication entre ledit terminal d'entrée de données (206) et ledit réseau de fournisseur de services (208) en réponse à l'entrée de ladite information de code d'autorisation dans ledit terminal d'entrée de données (206);
entrée d'un montant de transaction dans ledit terminal d'entrée de données (206); et
réduction du solde associé audit premier compte conformément audit montant de transaction.

10. Procédé selon la revendication 9, comprenant en outre l'étape consistant à créditer le solde associé à un second compte conformément audit montant de transaction.
